(19) Europäisches Patentamt
European Patent Office
Office européen des brevets

(11) **EP 4 749 899 A1**

(12) **EUROPEAN PATENT APPLICATION**
published in accordance with Art. 153(4) EPC

(43) Date of publication:
**27.05.2026  Bulletin 2026/22**

(21) Application number: **23946365.6**

(22) Date of filing: **19.09.2023**

(51) International Patent Classification (IPC):
***H02M 1/08*** (2006.01)

(52) Cooperative Patent Classification (CPC):
Y02B 70/10

(86) International application number:
**PCT/CN2023/119614**

(87) International publication number:
**WO 2025/020284 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.07.2023  CN 202310904247**

(71) Applicant: BCD Shanghai Micro-Electronics
Company Limited
Shanghai 200240 (CN)

(72) Inventors:
• ZOU, Cong
  Shanghai 200240 (CN)
• DOU, Sen
  Shanghai 200240 (CN)
• PENG, Shaohua
  Shanghai 200240 (CN)

(74) Representative: **Marks & Clerk LLP**
**15 Fetter Lane**
**London EC4A 1BW (GB)**

(54) **SWITCHING POWER SUPPLY AND CONTROL METHOD FOR SWITCHING POWER SUPPLY**

(57)    A switching power supply and a control method for the switching power supply, belonging to the technical field of integrated circuits. A secondary-side control circuit is coupled to a secondary side of a transformer (T1) of the switching power supply; a primary-side control circuit uses the transformer (T1) to receive a feedback signal (Vfb) that reflects an output voltage of the switching power supply, decodes encoded information by means of a change of the feedback signal (Vfb), and controls the switching power supply to match the power supply requirement of a load device. The switching power supply performs transmission by means of the transformer (T1) rather than an optocoupler, so as to prevent the parameter drift of the optocoupler caused by a signal processing circuit, a technological process or an environmental change from resulting in invalid or incomplete request information received by a primary-side control chip, thereby increasing the code transmission success rate of the primary-side control circuit and saving overall system costs. In the primary-side control circuit, the transformer (T1) is used to receive the feedback signal (Vfb) and the encoded information is decoded only by means of the change of the feedback signal (Vfb) so as to match the power supply requirement of the load device, thereby simplifying decoding operation processes.

FIG. 2

EP 4 749 899 A1

# Description

This application claims the priority to Chinese Patent Application No. 202310904247.5, titled "SWITCHING POWER SUPPLY AND CONTROL METHOD FOR SWITCHING POWER SUPPLY", filed on July 21, 2023 with the China National Intellectual Property Administration, which is incorporated herein by reference in its entirety.

## FIELD

The present disclosure relates to the technical field of integrated circuits, and in particular to a switching power supply and a method for controlling the switching power supply.

## BACKGROUND

In conventional fast charging solutions, a primary-side control chip adjusts an output voltage, an output current, and other information of a switching power supply in real time via an optocoupler based on voltage request information or current request information requested by a to-be-charged device (such as a mobile terminal device) and received by a secondary-side control chip, to transmit the request information requested by the terminal device from the secondary side to the primary side.

For conventional fast charging solutions, high-volume fast charging of consumer electronics is prone to be affected by limiting parameters of the optocoupler. Due to issues in signal processing circuit design of a system, manufacturing processes, or environmental changes, the parameters of the optocoupler drift, leading to a possibility that the request information received by the primary-side control chip is incomplete or even undetectable. This results in invalid information, adversely affecting charging operation of the to-be-charged device. Additionally, the inclusion of the optocoupler increases the cost of the system.

Therefore, how to reduce the cost of the system and prevent information received by the primary-side control chip being incomplete or undetectable is to be addressed by those skilled in the art.

## SUMMARY

The objective of the present disclosure is to provide a switching power supply and a method for controlling the switching power supply, to address technical issues in conventional switching power supplies of increased system cost due to an optocoupler, and information received by a primary-side control chip being incomplete or undetectable.

To address the above technical issues, a switching power supply is provided according to the present disclosure. The switching power supply is configured to supply power to a load device. The switching power supply includes: a secondary-side control circuit and a primary-side control circuit.

The secondary-side control circuit is coupled to a secondary side of a transformer in the switching power supply. The secondary-side control circuit is configured to receive a signal indicating a power requirement of the load device and encode the signal to generate encoded information.

The primary-side control circuit is configured to: receive, via the transformer, a feedback signal indicating an output voltage of the switching power supply, decode the encoded information based on a change in the feedback signal, and control the switching power supply to meet the power requirement of the load device.

In an embodiment, the change in the feedback signal is determined through: receiving, by the primary-side control circuit, a pulse width of the feedback signal of a current control period via the transformer, where the pulse width is equal to on-time of the secondary-side control circuit; acquiring the pulse width of the feedback signal of a previous control period of the current control period, where the pulse width of the feedback signal of the previous control period is stored in the primary-side control circuit; and acquiring a difference between the pulse width of the feedback signal of the current control period and the pulse width of the feedback signal of the previous control period, and determining the change in the feedback signal based on a relationship between the difference and a threshold.

In an embodiment, the primary-side control circuit is configured to decode the encoded information based on the change in the feedback signal through: decoding, by the primary-side control circuit, the encoded information transmitted by the secondary-side control circuit as a first level in response to the acquired difference being greater than the threshold; and decoding, by the primary-side control circuit, the encoded information transmitted by the secondary-side control circuit as a second level in response to the acquired difference being less than or equal to the threshold.

In an embodiment, the change in the feedback signal is determined through: receiving, by the primary-side control circuit, a pulse width of the feedback signal of a current control period via the transformer, where the pulse width is equal to on-time of the secondary-side control circuit; acquiring the pulse width of the feedback signal of a previous control period of the current control period, a primary-side current of the current control period, and the primary-side current of the previous control period, where the pulse width of the feedback signal of the previous control period is stored in the primary-side control circuit; and determining the change in the feedback signal based on a relationship between a ratio of the pulse width of the feedback signal of the current control period to the primary-side current of the current control period and the ratio of the pulse width of the feedback signal of the previous control period to the primary-side current of the previous control period.

In an embodiment, the primary-side control circuit is configured to decode the encoded information based on the change in the feedback signal through: decoding, by the primary-side control circuit, the encoded information transmitted by the secondary-side control circuit as a first level in response to the ratio corresponding to the current control period being less than the ratio corresponding to the previous control period; and decoding, by the primary-side control circuit, the encoded information transmitted by the secondary-side control circuit as a second level in response to the ratio corresponding to the current control period being equal to the ratio corresponding to the previous control period.

In an embodiment, the secondary-side control circuit includes a synchronous rectifier diode, and the encoded information is determined through: in response to receiving the signal indicating the power requirement of the load device, turning, by the secondary-side control circuit, the synchronous rectifier diode off after a preset delay, to encode the signal as the encoded information.

In an embodiment, the secondary-side control circuit includes a synchronous rectifier diode, and the encoded information is determined through: in response to receiving the signal indicating the power requirement of the load device, turning, by the secondary-side control circuit, the synchronous rectifier diode off; and encoding, by the secondary-side control circuit after turning off the synchronous rectifier diode, the signal during a period in which the synchronous rectifier diode is on as the encoded information.

In an embodiment, the secondary-side control circuit includes a secondary-side detection circuit, and the period in which the synchronous rectifier diode is on is determined through: detecting, by the secondary-side detection circuit, a time interval as the period, where the time interval starts from a time instant at which an output voltage signal of the secondary control circuit rises to a high-level state from a low-level state, and ends at a time instant at which the output voltage signal starts to fall from the high-level state to the low-level state after the synchronous rectifier diode is on.

In an embodiment, the primary-side control circuit includes a primary-side detection circuit, and the change in the feedback signal is determined through: acquiring a relationship between a current feedback signal and a reference value within a period, which starts from a time instant at which the feedback signal falls below the reference value, to determine the change in the current feedback signal.

In an embodiment, the primary-side control circuit is configured to decode the encoded information based on the change in the feedback signal through: decoding, by the primary-side control circuit, the encoded information transmitted by the secondary-side control circuit as a first level in response to the current feedback signal being detected to exceed the reference value within the period; and decoding, by the primary-side control circuit, the encoded information transmitted by the secondary-side control circuit as a second level in response to the current feedback signal being detected as not exceeding the reference value within the period.

In an embodiment, the secondary-side control circuit and the primary-side control circuit each includes a respective multiplexed PIN and is configured to adjust a resistance of a resistor connected to the multiplexed PIN to determine the period, and the resistance of the resistor connected to the multiplexed PIN is mapped to the period.

In an embodiment, the secondary-side control circuit further includes a voltage detection circuit, the voltage detection circuit is configured to detect a current at a VCC PIN of the secondary-side control circuit to obtain a change in a voltage at the VCC PIN, and the change in the voltage represents the change in the resistance of the resistor.

To address the above technical issues, a method for controlling a switching power supply is further provided according to the present disclosure. The switching power supply is configured to supply power to a load device. The switching power supply includes a secondary-side control circuit and a primary-side control circuit. The secondary-side control circuit is coupled to a secondary side of a transformer in the switching power supply. The method includes: controlling the secondary-side control circuit to receive a signal indicating a power requirement of the load device and encode the signal to generate encoded information; and controlling the primary-side control circuit to: receive, via the transformer, a feedback signal indicating an output voltage of the switching power supply, decode the encoded information based on a change in the feedback signal, and control the switching power supply to meet the power requirement of the load device.

In an embodiment, the change in the feedback signal is determined through: receiving a pulse width of the feedback signal of a current control period via the transformer, where the pulse width is equal to on-time of the secondary-side control circuit; acquiring the pulse width of the feedback signal of a previous control period of the current control period, where the pulse width of the feedback signal of the previous control period is stored in the primary-side control circuit; and acquiring a difference between the pulse width of the feedback signal of the current control period and the pulse width of the feedback signal of the previous control period, and determining the change in the feedback signal based on a relationship between the difference and a threshold.

In an embodiment, the decoding the encoded information based on the change in the feedback signal includes: decoding, in response to the acquired difference being greater than the threshold, the encoded information transmitted by the secondary-side control circuit as a first level; and decoding, in response to the acquired difference being less than or equal to the threshold, the encoded information transmitted by the secondary-side control circuit as a second level.

In an embodiment, the change in the feedback signal is determined through: receiving a pulse width of the feedback signal of a current control period via the transformer, where the pulse width is equal to on-time of the secondary-side control circuit; acquiring the pulse width of the feedback signal of a previous control period of the current control period, a primary-side current of the current control period, and the primary-side current of the previous control period, where the pulse width of the feedback signal of the previous control period is stored in the primary-side control circuit; and determining the change in the feedback signal based on a relationship between a ratio of the pulse width of the feedback signal of the current control period to the primary-side current of the current control period and the ratio of the pulse width of the feedback signal of the previous control period to the primary-side current of the previous control period.

In an embodiment, the decoding the encoded information based on the change in the feedback signal includes: decoding, in response to the ratio corresponding to the current control period being less than the ratio corresponding to the previous control period, the encoded information transmitted by the secondary-side control circuit as a first level; and decoding, in response to the ratio corresponding to the current control period being equal to the ratio corresponding to the previous control period, the encoded information transmitted by the secondary-side control circuit as a second level.

In an embodiment, the secondary-side control circuit includes a synchronous rectifier diode, and the encoded information is determined through: turning, in response to receiving the signal indicating the power requirement of the load device, the synchronous rectifier diode off after a preset delay, to encode the signal as the encoded information.

In an embodiment, the secondary-side control circuit includes a synchronous rectifier diode, and the encoded information is determined through: turning, in response to receiving the signal indicating the power requirement of the load device, the synchronous rectifier diode off; and encoding, after turning off the synchronous rectifier diode, the signal during a period in which the synchronous rectifier diode is on, as the encoded information.

In an embodiment, the secondary-side control circuit includes a secondary-side detection circuit, and the period in which the synchronous rectifier diode is on is determined through: detecting a time interval as the period, where the time interval starts from a time instant at which an output voltage signal of the secondary control circuit rises to a high-level state from a low-level state, and ends at a time instant at which the output voltage signal starts to fall from the high-level state to the low-level state after the synchronous rectifier diode is on.

In an embodiment, the primary-side control circuit includes a primary-side detection circuit, and the change in the feedback signal is determined through:

acquiring a relationship between a current feedback signal and a reference value within a period, which starts from a time instant at which the feedback signal falls below the reference value, to determine the change in the current feedback signal.

In an embodiment, the decoding the encoded information based on the change in the feedback signal includes: decoding, in response to the current feedback signal being detected to exceed the reference value within the period, the encoded information transmitted by the secondary-side control circuit as a first level; and decoding, in response to the current feedback signal being detected as not exceeding the reference value within the period, the encoded information transmitted by the secondary-side control circuit as a second level.

In an embodiment, the secondary-side control circuit and the primary-side control circuit each includes a respective multiplexed PIN and is configured to adjust a resistance of a resistor connected to the multiplexed PIN to determine the period, and the resistance of the resistor connected to the multiplexed PIN is mapped to the period.

In an embodiment, the secondary-side control circuit further includes a voltage detection circuit, the voltage detection circuit is configured to detect a current at a VCC PIN of the secondary-side control circuit to obtain a change in a voltage at the VCC PIN, and the change in the voltage represents the change in the resistance of the resistor.

In an embodiment, after the feedback signal is received via the transformer, the method further includes: setting a start bit and a tail check bit in the encoded information; and decoding the encoded information based on the change in the feedback signal, the start bit, and the tail check bit to obtain decoded information.

The switching power supply according to the present disclosure is configured to supply power to a load device. The switching power supply includes: a secondary-side control circuit and a primary-side control circuit. The secondary-side control circuit is coupled to a secondary side of a transformer in the switching power supply. The secondary-side control circuit is configured to receive a signal indicating a power requirement of the load device and encode the signal to generate encoded information. The primary-side control circuit is configured to: receive, via the transformer, a feedback signal indicating an output voltage of the switching power supply, decode the encoded information based on a change in the feedback signal, and control the switching power supply to meet the power requirement of the load device. The switching power supply transmits signals via the transformer instead of an optocoupler, thereby avoiding parameter drift in the optocoupler caused by issues in a signal processing circuit, manufacturing processes, or environmental changes. Such parameter drift causes request information received by a primary-side control chip to be invalid or incomplete. Thus, by using the switching power supply, the transmission success rate of the primary-side control circuit is enhanced, and the cost of the entire system is reduced. Additionally, the feedback signal is received via the transformer in the primary-side control circuit, and the encoded information is decoded only based on the change in the feedback signal to meet the power requirement of the load device, which simplifies the decoding process.

In addition, a method for controlling a switching power supply is further provided according to the present disclosure, which offers the same beneficial effects as the above-mentioned switching power supply.

## BRIEF DESCRIPTION OF THE DRAWINGS

Hereinafter, drawings to be applied in embodiments are briefly described to clarify illustration of the embodiments of the present disclosure. Apparently, the drawings in the following descriptions show only some embodiments of the present disclosure, and other drawings may be obtained by those skilled in the art based on these drawings without creative efforts.

FIG. 1 is a schematic structural diagram of a conventional switching power supply;

FIG. 2 is a schematic structural diagram of a switching power supply according to an embodiment of the present disclosure;

FIG. 3 is a schematic diagram illustrating a change in a ratio of on-time to a peak current signal according to an embodiment of the present disclosure;

FIG. 4 is a schematic diagram illustrating a change in a ratio of on-time to a peak current signal according to another embodiment of the present disclosure;

FIG. 5 is a schematic diagram illustrating detection of voltage rise information for a feedback signal according to the present disclosure; and

FIG. 6 is a flowchart of a method for controlling a switching power supply according to an embodiment of the present disclosure.

## DETAILED DESCRIPTION

Hereinafter, technical solutions in embodiments of the present disclosure are described clearly and completely with reference to the drawings in the embodiments of the present disclosure. Apparently, the described embodiments are only some of the embodiments of the present disclosure, rather than all of the embodiments. All other embodiments obtained by those skilled in the art based on the embodiments in the present disclosure without any creative effort fall within the protection scope of the present disclosure.

The core of the present disclosure is to provide a switching power supply and a method for controlling the switching power supply, to address technical issues in conventional switching power supplies of increased system cost due to an optocoupler, and information received by a primary-side control chip being incomplete or undetectable.

To enable those skilled in the art to understand the solutions of the present disclosure, the present disclosure is further described in detail below in conjunction with the drawings and the embodiments.

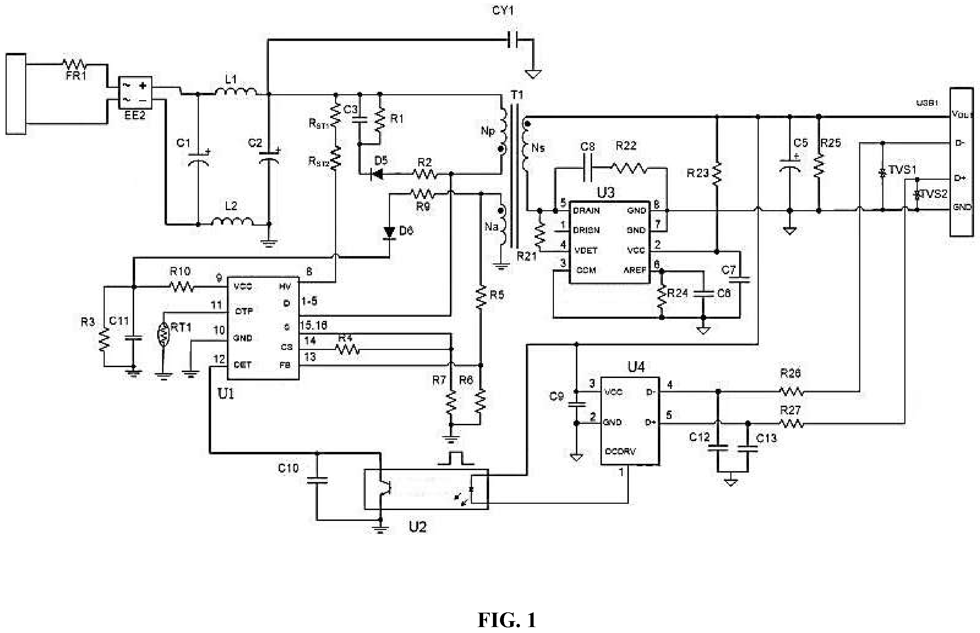

It should be noted that FIG. 1 is a schematic structural diagram of a conventional switching power supply. In FIG. 1, an optocoupler U2 is employed, and is highly susceptible to factors such as temperature. A limiting parameter of the optocoupler U2 being exceeded leads to a possibility that request information received by a primary-side control chip U1 is incomplete or even undetectable.

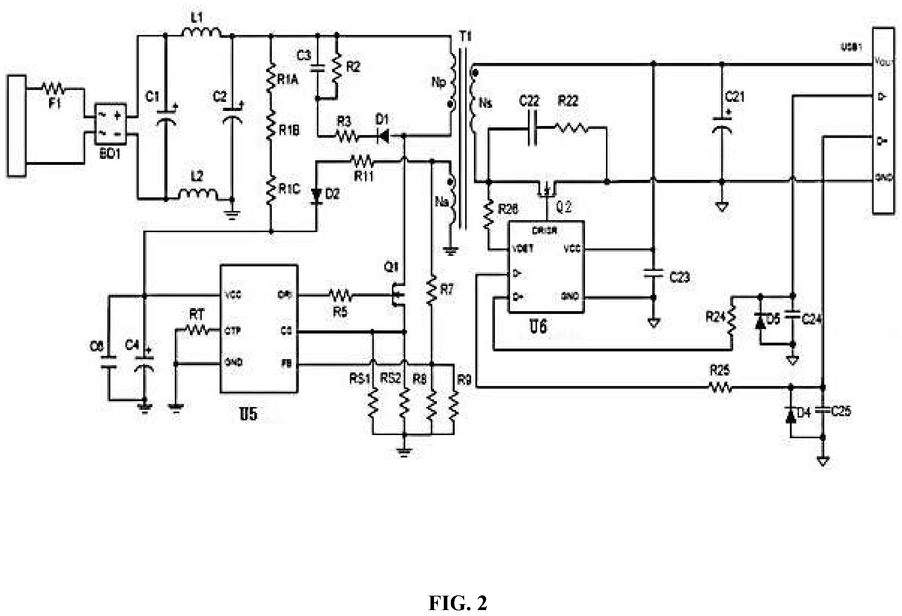

FIG. 2 is a schematic structural diagram of a switching power supply according to an embodiment of the present disclosure. As shown in FIG. 2, the switching power supply is configured to supply power to a load device. A secondary-side control circuit is coupled to a secondary side of a transformer in the switching power supply. The secondary control circuit is configured to receive a signal indicating a power requirement of the load device and encode the signal to generate encoded information.

A primary-side control circuit is configured to: receive, via the transformer, a feedback signal indicating an output voltage of the switching power supply, decode the encoded information based on a change in the feedback signal, and control the switching power supply to meet the power requirement of the load device.

It should be noted that FIG. 2 shows only an embodiment of the switching power supply, which is used to illustrate an operating principle of the secondary-side control circuit and the primary-side control circuit in the switching power supply according to the present disclosure. FIG. 2 may also show a structural diagram of another switching power supply, as long as the switching power supply employs a transformer instead of an optocoupler for signal transmission. The switching power supply includes the secondary-side control circuit and the primary-side control circuit. As shown in FIG. 2, the switching power supply includes a filter, a rectifier bridge BD1, input capacitors C1 and C2, a control chip U5 of the primary-side control circuit, a primary-side current sampling resistor R1 (including R1A, R1B, and R1C), a secondary-side synchronous rectifier diode Q2, a control chip U6 of the secondary-side control circuit, a USB interface, a transformer T1 (including a primary winding Np, a secondary winding Ns, and an auxiliary winding Na), and an output capacitor C21.

The control chip U5 of the primary-side control circuit is coupled to a primary side of the transformer in the switching power supply. The control chip U5 is configured to control a first power switching transistor Q1 to be turned on or off, and transmit energy to the control chip U6 of the secondary-side control circuit via the transformer T1. The control chip U6 of the secondary-side control circuit is connected to the load device. The secondary-side control circuit is coupled to the secondary side of the transformer in the switching power supply. The secondary-side control circuit is configured to receive the signal indicating the power requirement of the load device. When the signal is obtained or triggered is not limited herein. The signal can be actively provided by the load device or received in real time by the secondary-side control circuit from the load device. If a current signal differs from the signal of a previous period or includes a specific level, the current signal is determined as the signal indicating the power requirement. The signal is encoded in the secondary-side control circuit to generate encoded information.

After the encoded information is generated in the secondary-side control circuit, the encoded information is transmitted to the primary-side control circuit via the transformer. That is, the primary-side control circuit receives the encoded information via the transformer. A voltage across the auxiliary winding Na of the transformer T1 is transmitted via a resistor R7 to output the feedback signal Vfb. The outputted feedback signal represents the output voltage of the switching power supply and serves as a feedback control signal, which is inputted to the primary-side control circuit via an FB pin for control. In this embodiment, the encoded information is decoded based on the change in the feedback signal to control the switching power supply to meet the power requirement of the load device.

It can be understood that in this embodiment, the encoded information can be decoded only by using a signal parameter of the feedback signal. In conventional switching power supplies, the encoded information is decoded by using a detection signal which is generated by the primary-side control circuit operating in a specific scenario. Compared with the conventional technology, the specific scenario is not required in this embodiment. In this embodiment, the encoded information can be decoded based on the feedback signal itself as long as the feedback signal changes, thereby saving and simplifying the decoding process.

One or more parameter for representing the change in the feedback signal may be a pulse width of the feedback signal, or the pulse width of the feedback signal and other related parameters. In the aforementioned two cases, the feedback signal changes during decoding. Alternatively, the change in the feedback signal may result from a combination of the secondary-side control circuit for encoding and the primary-side control circuit for decoding. This is not limited herein, and the parameter can be set based on actual situations.

The switching power supply according to an embodiment of the present disclosure is configured to supply power to a load device. The switching power supply includes: a secondary-side control circuit and a primary-side control circuit. The secondary-side control circuit is coupled to a secondary side of a transformer in the switching power supply. The secondary-side control circuit is configured to receive a signal indicating a power requirement of the load device and encode the signal to generate encoded information. The primary-side control circuit is configured to: receive, via the transformer, a feedback signal indicating an output voltage of the switching power supply, decode the encoded information based on a change in the feedback signal, and control the switching power supply to meet the power requirement of the load device. The switching power supply transmits signals via the transformer instead of an optocoupler, thereby avoiding parameter drift in the optocoupler caused by issues in a signal processing circuit, manufacturing processes, or environmental changes. Such parameter drift causes request information received by a primary-side control chip to be invalid or incomplete. Thus, by using the switching power supply, the transmission success rate of the primary-side control circuit is enhanced, and the cost of the entire system is reduced. Additionally, the feedback signal is received via the transformer in the primary-side control circuit, and the encoded information is decoded only based on the change in the feedback signal to meet the power requirement of the load device, which simplifies the decoding process.

Based on the above embodiments, in an embodiment, in the primary-side control circuit for decoding, a process of determining the change in the feedback signal based on the feedback signal itself includes: receiving, by the primary-side control circuit, a pulse width of the feedback signal of a current control period via the transformer, where the pulse width is equal to on-time of the secondary-side control circuit; acquiring the pulse width of the feedback signal of a previous control period of the current control period, where the pulse width of the feedback signal of the previous control period is stored in the primary-side control circuit; and acquiring a difference between the pulse width of the feedback signal of the current control period and the pulse width of the feedback signal of the previous control period, and determining the change in the feedback signal based on a relationship between the difference and a threshold.

In an embodiment, the primary-side control circuit receives the pulse width of the feedback signal of the current control period via the transformer, the pulse width is equal to the on-time of the secondary-side control circuit, and the pulse width of the feedback signal of the previous control period is acquired. The pulse width of the feedback signal of the previous control period is stored in the primary-side control circuit. Upon received, the pulse width of the feedback signal of each control period is stored in the primary-side control circuit. Additionally, considering the limited storage capacity of the primary-side control circuit, the feedback signal of control periods is stored in a rolling manner. For example, only signal parameters of the feedback signal of N control periods including the current control period which is the most recent one and its previous (N-1) control periods are stored. This is not limited herein, and the storage manner can be set based on actual situations.

The pulse widths of the feedback signal of two adjacent control periods are compared to determine the difference between the two pulse widths. Whether the difference is positive or negative is not limited herein as long as the difference exists. It should be noted that whether the difference is negative or positive, an absolute value of the difference is taken. The change in the feedback signal is determined based on a relationship between the absolute value of the difference and the threshold.

Based on the above embodiments, in an embodiment, the primary-side control circuit is configured to decode the encoded information based on the change in the feedback signal through: decoding, by the primary-side control circuit, the encoded information transmitted by the secondary-side control circuit as a first level in response to the acquired difference being greater than the threshold; and decoding, by the primary-side control circuit, the encoded information transmitted by the secondary-side control circuit as a second level in response to the acquired difference being less than or equal to the threshold.

In an embodiment, the primary-side control circuit determines whether the difference is greater than the threshold. In response to the difference being greater than the threshold, the encoded information transmitted by the secondary-side control circuit is decoded as the first level; and in response to the difference being less than or equal to the threshold, the encoded information transmitted by the secondary-side control circuit is decoded as the second level. The first level is different from the second level.

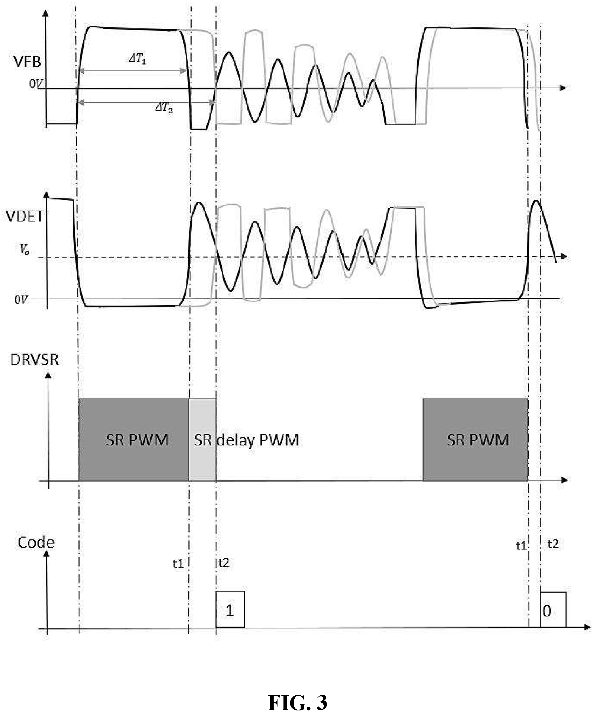

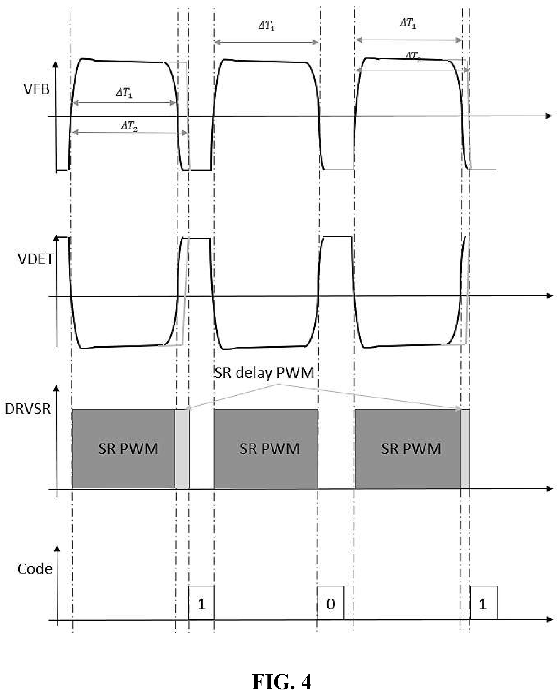

FIG. 3 is a schematic diagram illustrating a change in a ratio of on-time to a peak current signal according to an embodiment of the present disclosure. FIG. 4 is a schematic diagram illustrating a change in a ratio of on-time to a peak current signal according to another embodiment of the present disclosure. FIG. 3 represents a light-load condition, and FIG. 4 represents a heavy-load condition. As shown in FIG. 3 and FIG. 4, black solid lines represent operating waveforms of signals under normal operating conditions, and gray solid lines represent operating waveforms of the signals after the encoded information is transmitted by the secondary-side control circuit. Among waveform diagrams presented from top to bottom, the first one is the waveform diagram of the feedback signal from the primary-side control circuit, the second one is the waveform diagram of the signal from the secondary-side control circuit, the third one is the waveform diagram of a pulse width modulation (PWM) signal of the switching power supply, and the fourth one is a signal diagram of the switching power supply.

Under normal operating conditions, the on-time corresponding to the pulse width *Tons* of the feedback signal is a constant $\Delta T_1$. When a secondary-side synchronous rectification controller is turned off with a delay of $\Delta T_{ds}$ ($\Delta T_{ds} = \Delta T_2 - \Delta T_1$), the on-time transitions from the on-time $\Delta T_1$ of the previous control period to the on-time $\Delta T_2$ of the current control period. A difference between the on-time of the current control period and the on-time of the previous control period is acquired, and the difference is compared with a threshold. If the difference is detected to be greater than the threshold, it is considered that the secondary side transmits a logic high level to the primary side. If the difference is detected to be less than or equal to the threshold, it is considered that the secondary side transmits a logic low level to the primary side.

The threshold may be set based on empirical values, or may be obtained through extensive experiments. The threshold is required to adhere to upper and lower limits. Normal system fluctuations in the primary-side control circuit cannot be misjudged as encoded signals when the difference is equal to a minimum value of the threshold, and normal operation of the system can be ensured when the difference is equal to a maximum value of the threshold. The threshold can be set as long as these two conditions are met.

According to the embodiment of the present disclosure, the change in the feedback signal is determined based on a relationship between the pulse widths of the feedback signal of two adjacent control periods and the threshold. Thus, the change in the feedback signal can be determined only based on the pulse width of the feedback signal, enhancing a decoding rate and simplifying the decoding process.

Based on the above embodiments, in an embodiment, in the primary-side control circuit for decoding, a process of determining the change in the feedback signal based on the pulse widths of the feedback signal and other related parameters includes: receiving, by the primary-side control circuit, a pulse width of the feedback signal of a current control period via the transformer, where the pulse width is equal to on-time of the secondary-side control circuit; acquiring the pulse width of the feedback signal of a previous control period of the current control period, a primary-side current of the current control period, and the primary-side current of the previous control period, where the pulse width of the feedback signal of the previous control period is stored in the primary-side control circuit; and determining the change in the feedback signal based on a relationship between a ratio of the pulse width of the feedback signal of the current control period to the primary-side current of the current control period and the ratio of the pulse width of the feedback signal of the previous control period to the primary-side current of the previous control period.

In an embodiment, the primary-side control circuit receives the pulse width of the feedback signal of the current control period via the transformer, where the pulse width is equal to the on-time of the secondary-side control circuit, and simultaneously acquires the stored pulse width of the feedback signal of the previous control period, the primary-side currents of the current control period and the previous control period. In this embodiment, the primary-side current refers to a peak current signal in the primary-side control circuit. Under normal conditions, the ratio of the pulse width of the feedback signal to the primary-side current is constant. After the encoded information is transmitted by the secondary-side synchronous rectification controller, the pulse width of the feedback signal increases.

The change in the ratio of the pulse width of the feedback signal to the primary-side current between two adjacent control periods is used to determine the change in the feedback signal. In a case that the ratio of the pulse width of the feedback signal to the primary-side current of the current control period is identical to that of the previous control period, it indicates no change in the feedback signal. In a case that the ratio of the pulse width of the feedback signal to the primary-side current of the current control period is different from that of the previous control period, it indicates that the feedback signal changes.

In an embodiment, the primary-side control circuit is configured to decode the encoded information based on the change in the feedback signal through: decoding, by the primary-side control circuit, the encoded information transmitted by the secondary-side control circuit as a first level in response to the ratio corresponding to the current control period being less than the ratio corresponding to the previous control period; and decoding, by the primary-side control circuit, the encoded information transmitted by the secondary-side control circuit as a second level in response to the ratio corresponding to the current control period being equal to the ratio corresponding to the previous control period.

In an embodiment, when the ratio corresponding to the current control period is less than the ratio corresponding to the previous control period, it indicates a decrease in the ratio and an extension of the on-time in the current control period. In this case, the primary-side control circuit decodes the encoded information transmitted by the secondary-side control circuit as the first level, and it is determined that the secondary side issues the encoded information. When the ratio corresponding to the current control period is equal to the ratio corresponding to the previous control period, the primary-side control circuit decodes the encoded information transmitted by the secondary-side control circuit as the second level. The ratio remains unchanged and this case is represented by using the second level. The first level is different from the second level.

A ratio relationship between the pulse width of the feedback signal and the primary-side current is expressed by:

$$\frac{I_{pk}}{T_{ons}} = \frac{n \cdot V_{out}}{L};$$

Where, $I_{pk}$ represents the primary-side current, $T_{ons}$ represents the pulse width of the feedback signal, $n$ represents the number of turns of the transformer, $V_{out}$ represents an output voltage of the primary-side control circuit, and $L$ represents an inductance of the primary-side control circuit.

Under normal conditions, the ratio on the right side of the above equation does not change and is a constant. In a case that the ratio of the pulse width of the feedback signal to the primary-side current decreases to a certain extent, for example, decreasing to a ratio threshold, it indicates that the secondary-side control circuit is transmitting the encoded information to the primary-side control circuit.

According to the embodiment of the present disclosure, the change in the feedback signal is determined based on the ratio of the pulse width of the feedback signal to the primary-side current, which ensures the authoritativeness of the change in the feedback signal, enhances the decoding rate, and simplifies the decoding process.

Based on the above embodiments, in an embodiment, the secondary-side control circuit includes a synchronous rectifier diode, and the encoded information is determined through: turning, by the secondary-side control circuit, the synchronous rectifier diode off after a preset delay in response to the secondary-side control circuit receiving the signal indicating the power requirement of the load device, to encode the signal as the encoded information.

In an embodiment, as shown in FIG. 2, the synchronous rectifier diode Q2 is connected in parallel with a capacitor C22 and a resistor R22. When receiving the signal indicating the power requirement of the load device, the secondary-side control circuit controls the synchronous rectifier diode to be turned off after the preset delay. In the above embodiments, the change in the feedback signal is reflected in decoding. However, in the secondary-side control circuit, the signal is encoded as the encoded information by controlling the synchronous rectifier diode to be turned off with a delay. The delayed turn-off of the synchronous rectifier diode causes a change in the on-time of the feedback signal, thereby leading to the change to the feedback signal. In this embodiment, the encoded information is decoded based on the change in the feedback signal to meet the power requirement of the load device.

It should be noted that the preset delay may be 0 or may be greater than 0. In response to the preset delay being 0, it is determined that the synchronous rectifier diode is turned off without a delay. The preset delay is not limited herein, and specific preset delay data can be determined based on actual situations.

According to the embodiment of the present disclosure, determining the change in the feedback signal during decoding in the primary-side control circuit requires controlling the synchronous rectifier diode to be turned off with a delay in the secondary-side control circuit to receive the encoded information, facilitating the decoding of the encoded information.

In the above embodiments, the change in the feedback signal is determined only during decoding in the primary-side control circuit. In another embodiment in combination with the secondary-side control circuit for encoding and the primary-side control circuit for decoding, the secondary-side control circuit includes a synchronous rectifier diode, and the encoded information is determined through: turning, by the secondary-side control circuit, the synchronous rectifier diode off in response to the secondary-side control circuit receiving the signal indicating the power requirement of the load device; and encoding, by the secondary-side control circuit after turning off the synchronous rectifier diode, the signal during a period in which the synchronous rectifier diode is on as the encoded information.

In an embodiment, during the period in which the synchronous rectifier diode is on after the synchronous rectifier diode is turned off in response to the secondary-side control circuit receiving the signal indicating the power requirement of the load device, the signal is encoded as the encoded information. In a case of an abnormal turn-off state, the synchronous rectifier diode is on for a period after being turned off. During an interval between two conduction periods, the feedback signal in the primary-side control circuit exhibits a dip in a waveform of the feedback signal. In the above embodiments, the synchronous rectifier diode of the secondary-side control circuit is in a normal turn-off state, and the period should also be considered in the abnormal turn-off state for other cases. Therefore, in this embodiment, the encoded information is determined under an abnormal turn-off condition.

According to the embodiment of the present disclosure, the encoded information is determined during the period after the synchronous rectifier diode is turned off by the secondary-side control circuit, and thus the obtained encoded information is comprehensive by considering various aspects, facilitating the subsequent decoding process.

Based on the above embodiments, in an embodiment for determining the period, the secondary-side control circuit includes a secondary-side detection circuit, and the period in which the synchronous rectifier diode is on is determined: detecting, by the secondary-side detection circuit, a time interval as the period, where the time interval starts from a time instant at which an output voltage signal of the secondary control circuit rises to a high-level state from a low-level state, and ends at a time instant at which the output voltage signal starts to fall from the high-level state to the low-level state after the synchronous rectifier diode is on.

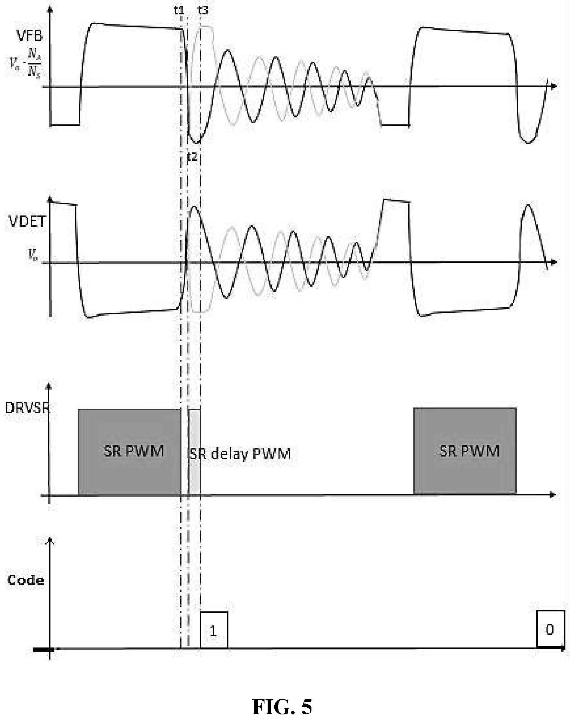

FIG. 5 is a schematic diagram illustrating detection of voltage rise information for a feedback signal according to the present disclosure. As shown in a second waveform diagram of FIG. 5, the secondary-side detection circuit detects that the output voltage signal of the secondary control circuit gradually rises to a high-level state from a low-level state, and a time interval from a time instant at which the output voltage signal reaches the high-level state to the time instant at which the output voltage signal drops to the low-level state after the synchronous rectifier diode is on is determined as the period which corresponds to a conduction period from t2 to t3 in FIG. 5. In a third PWM diagram, the conduction period is mapped to a PWM square wave following the dip that appears after an abnormal turn-off event.

An ordinate in a first waveform diagram of FIG. 5 is $V_0 \cdot \dfrac{N_a}{N_S}$, where $N_a$ represents the auxiliary winding on the primary side of the transformer in FIG. 2, and $N_S$ represents the secondary winding on the secondary side of the transformer in FIG. 2.

Accordingly, in an embodiment, for a primary-side detection circuit, the change in the feedback signal of the primary-side control circuit is determined through: acquiring a relationship between a current feedback signal and a reference value within a period, which starts from a time instant at which the feedback signal falls below the reference value, to determine the change in the current feedback signal.

In conjunction with a first waveform diagram illustrating the feedback signal of the primary-side control circuit in FIG. 5, a relationship between the current feedback signal and the reference value is acquired within the period which starts from the time instant at which the feedback signal falls below the reference value, to determine the change in the current feedback signal.

In an embodiment, the relationship between the current feedback signal and the reference value is tracked in real time, and the specific relationship is not limited. For example, if the current feedback signal remains consistently below the reference value, it indicates no change in the current feedback signal. If the current feedback signal rises toward a high level and exceeds the reference value, it indicates that a higher signal appears during the period in which the synchronous rectifier diode is on induced by delayed turn-off. This indicates that the encoded information is transmitted by the secondary-side control circuit to the primary-side control circuit. In FIG. 5, the reference value is 0, and it may also be other values. Setting the reference value to 0 in this embodiment allows for clear illustration of waveform changes.

In an embodiment, the primary-side control circuit is configured to decode the encoded information based on the change in the feedback signal through: decoding, by the primary-side control circuit, the encoded information transmitted by the secondary-side control circuit as a first level in response to the current feedback signal being detected to exceed the reference value within the period; and decoding, by the primary-side control circuit, the encoded information transmitted by the secondary-side control circuit as a second level in response to the current feedback signal being detected as not exceeding the reference value within the period.

In an embodiment, the primary-side control circuit is configured to decode the encoded information transmitted by the secondary-side control circuit as the first level in response to the current feedback signal being detected to exceed the reference value within the period; and the primary-side control circuit is configured to decode the encoded information transmitted by the secondary-side control circuit as the second level in response to the current feedback signal being detected as not exceeding the reference value within the period.

For example, timing starts at a time instant t1 when the secondary-side chip detects that Vdet transitions from a negative half-axis to a positive half-axis. After a duration of T1 (T1=t2-t1), turn-on operation starts at the time instant t2, lasts for 200ns (approximately 35ns under high voltage), and ends at the time instant t3. Taking the primary-side chip as an example, t1 is the time instant at which the signal starts to fall from a high level, t2 is the time instant at which the feedback signal intersects with voltage rise information, and t3 is the time instant at which the voltage rise information reaches its peak after delayed turn-off.

The operational logic of the primary-side control chip is as follows. The feedback signal is detected starting from the time instant at which the feedback signal falls below a feedback signal threshold from a high level, and whether the voltage rise information of the feedback signal exceeds the feedback signal threshold within a period is determined. If the voltage rise information exceeds the feedback signal threshold within the period, it indicates that the secondary side transmits a logic high level to the primary side. If the voltage rise information does not exceed the feedback signal threshold within the period, the secondary side transmits a logic low level to the primary side.

It should be noted that an equation for calculating the period is:

$$T_2 = \pi \cdot \sqrt{L_p \cdot C_{oss}} \ ;$$

Where, $L_p$ represents an inductance of the primary-side control circuit, and $C_{oss}$ represents a capacitance of a parasitic capacitor of the synchronous rectifier diode.

In an embodiment, the secondary-side control circuit and the primary-side control circuit each comprises a respective multiplexed PIN and is configured to adjust a resistance of a resistor connected to the multiplexed PIN to determine the period, and the resistance of the resistor connected to the multiplexed PIN is mapped to the period.

In an embodiment, the secondary-side control circuit and the primary-side control circuit each includes a respective multiplexed PIN, and the period is obtained by adjusting the resistance of the resistor connected to the multiplexed PIN. In conjunction with FIG. 2, the resistance of the resistor connected to a Vdet pin is varied to adjust a period $T_2$ to adapt to different systems. To adjust the period by changing the resistance, a functional mapping relationship is established between the resistance and the period in respective chips of the control circuits. The specific functional mapping relationship is not limited in this embodiment, and existing functional relationships may be used based on actual situations or custom functional relationships may be constructed.

Additionally, to adjust the period, in the secondary-side control circuit, the secondary-side control circuit further includes a voltage detection circuit as an embodiment.

The voltage detection circuit is configured to detect a current at a VCC PIN of the secondary-side control circuit to obtain a change in a voltage at the VCC PIN, and the change in the voltage represents the change in the resistance of the resistor.

In an embodiment, by changing the current at the VCC PIN of the secondary-side control circuit and charging a fixed capacitor with the current, different voltages are obtained to obtain the change in the voltage. The change in the voltage can be used to represent the change in the resistance of the resistor.

According to the embodiment of the present disclosure, the change in the feedback signal is determined based on the change caused by the synchronous rectifier diode which is on for a second time, enhancing the flexibility of the detection method and improving the accuracy of detection.

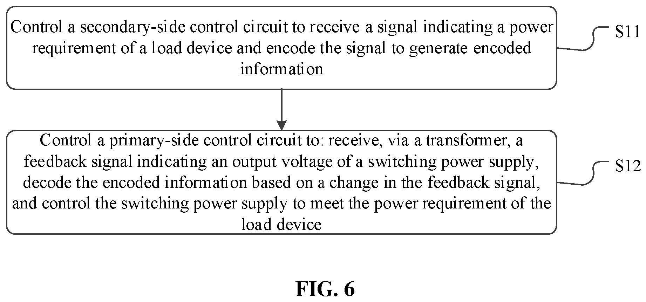

FIG. 6 is a flowchart of a method for controlling a switching power supply according to an embodiment of the present disclosure. As shown in FIG. 6, the method is applied to a switching power supply, and the switching power supply is configured to supply power to a load device. The switching power supply includes a secondary-side control circuit and a primary-side control circuit. The secondary-side control circuit is coupled to a secondary side of a transformer in the switching power supply.

In step S11, the secondary-side control circuit is controlled to receive a signal indicating a power requirement of the load device and encode the signal to generate encoded information.

In step S12, the primary-side control circuit is controlled to: receive, via the transformer, a feedback signal indicating an output voltage of the switching power supply, decode the encoded information based on a change in the feedback signal, and control the switching power supply to meet the power requirement of the load device.

In an embodiment, the secondary-side control circuit is controlled to receive the signal indicating the power requirement of the load device and encode the signal to generate the encoded information. The encoding algorithm is not limited herein and may be selected based on actual situations. The primary-side control circuit is controlled to receive the feedback signal indicating the output voltage of the switching power supply via the transformer, decode the encoded information only based on the change in the feedback signal, and control the switching power supply to meet the power requirement of the load device.

In the method for controlling the switching power supply according to the embodiment of the present disclosure, the switching power supply is configured to supply power to the load device and includes the secondary-side control circuit and the primary-side control circuit. The secondary-side control circuit is coupled to the secondary side of the transformer in the switching power supply. The secondary-side control circuit is controlled to receive the signal indicating the power requirement of the load device and encode the signal to generate the encoded information. The primary-side control circuit is controlled to: receive, via the transformer, the feedback signal indicating the output voltage of the switching power supply, decode the encoded information based on the change in the feedback signal, and control the switching power supply to meet the power requirement of the load device. According to the method for controlling the switching power supply, the switching power supply transmits signals via the transformer instead of an optocoupler, thereby avoiding parameter drift in the optocoupler caused by issues in a signal processing circuit, manufacturing processes, or environmental changes. Such parameter drift causes request information received by a primary-side control chip to be invalid or incomplete. Thus, by using the method, the transmission success rate of the primary-side control circuit is enhanced, and the cost of the entire system is reduced. Additionally, the feedback signal is received via the transformer in the primary-side control circuit, and the encoded information is decoded only based on the change in the feedback signal to meet the power requirement of the load device, which simplifies the decoding process.

Based on the above embodiments, in an embodiment, the change in the feedback signal is determined through: receiving a pulse width of the feedback signal of a current control period via the transformer, where the pulse width is equal to on-time of the secondary-side control circuit; acquiring the pulse width of the feedback signal of a previous control period of the current control period, where the pulse width of the feedback signal of the previous control period is stored in the primary-side control circuit; and acquiring a difference between the pulse width of the feedback signal of the current control period and the pulse width of the feedback signal of the previous control period, and determining the change in the feedback signal based on a relationship between the difference and a threshold.

In an embodiment, the decoding the encoded information based on the change in the feedback signal includes: decoding, in response to the acquired difference being greater than the threshold, the encoded information transmitted by the secondary-side control circuit as a first level; and decoding, in response to the acquired difference being less than or equal to the threshold, the encoded information transmitted by the secondary-side control circuit as a second level.

In an embodiment, the change in the feedback signal is determined through: receiving a pulse width of the feedback signal of a current control period via the transformer, where the pulse width is equal to on-time of the secondary-side control circuit; acquiring the pulse width of the feedback signal of a previous control period of the current control period, a primary-side current of the current control period, and the primary-side current of the previous control period, where the pulse width of the feedback signal of the previous control period is stored in the primary-side control circuit; and determining the change in the feedback signal based on a relationship between a ratio of the pulse width of the feedback signal of the current control period to the primary-side current of the current control period and the ratio of the pulse width of the feedback signal of the previous control period to the primary-side current of the previous control period.

In an embodiment, the decoding the encoded information based on the change in the feedback signal includes: decoding, in response to the ratio corresponding to the current control period being less than the ratio corresponding to the previous control period, the encoded information transmitted by the secondary-side control circuit as a first level; and decoding, in response to the ratio corresponding to the current control period being equal to the ratio corresponding to the previous control period, the encoded information transmitted by the secondary-side control circuit as a second level.

In an embodiment, the secondary-side control circuit includes a synchronous rectifier diode, and the encoded information is determined through: turning, in response to receiving the signal indicating the power requirement of the load device, the synchronous rectifier diode off after a preset delay, to encode the signal as the encoded information.

In an embodiment, the secondary-side control circuit includes a synchronous rectifier diode, and the encoded information is determined through: turning, in response to receiving the signal indicating the power requirement of the load device, the synchronous rectifier diode off; and encoding, after turning off the synchronous rectifier diode, the signal during a period in which the synchronous rectifier diode is on, to obtain the encoded information.

In an embodiment, the secondary-side control circuit includes a secondary-side detection circuit, and the period in which the synchronous rectifier diode is on is determined through: detecting a time interval as the period, where the time interval starts from a time instant at which an output voltage signal of the secondary control circuit rises to a high-level state from a low-level state, and ends at a time instant at which the output voltage signal starts to fall from the high-level state to the low-level state after the synchronous rectifier diode is on.

In an embodiment, the primary-side control circuit includes a primary-side detection circuit, and the change in the feedback signal is determined through: acquiring a relationship between a current feedback signal and a reference value within a period, which starts from a time instant at which the feedback signal falls below the reference value, to determine the change in the current feedback signal.

In an embodiment, the decoding the encoded information based on the change in the feedback signal includes: decoding, in response to the current feedback signal being detected to exceed the reference value within the period, the encoded information transmitted by the secondary-side control circuit as a first level; and decoding, in response to the current feedback signal being detected as not exceeding the reference value within the period, the encoded information transmitted by the secondary-side control circuit as a second level.

In an embodiment, the secondary-side control circuit and the primary-side control circuit each includes a respective multiplexed PIN and is configured to adjust a resistance of a resistor connected to the multiplexed PIN to determine the period, and the resistance of the resistor connected to the multiplexed PIN is mapped to the period.

In an embodiment, the secondary-side control circuit further includes a voltage detection circuit.

The voltage detection circuit is configured to detect a current at a VCC PIN of the secondary-side control circuit to obtain a change in a voltage at the VCC PIN, and the change in the voltage represents the change in the resistance of the resistor.

The method for controlling the switching power supply in the above embodiments corresponds to the embodiments of the switching power supply described above. Thus, details are not repeated here, and reference can be made to the corresponding embodiments above.

In an embodiment, after the feedback signal is received via the transformer, the method further includes: setting a start bit and a tail check bit in the encoded information; and decoding the encoded information based on the change in the feedback signal, the start bit, and the tail check bit to obtain decoded information.

In an embodiment, to improve the accuracy of the received encoded information, the entire encoded information is configured with multiple bits including one or more start bit and one or more tail check bit to prepare for the decoding on the primary side. By setting a special start bit and a special tail check bit, the primary-side control circuit analyzes the encoded information under normal operating conditions based on the change in the feedback signal, the start bit, and the tail check bit to obtain the decoded information. That is, by using a data packet containing the special start bit and the special tail check bit, the encoded information to be transmitted to the primary-side control circuit by the secondary-side control circuit can be analyzed, and then voltage and current adjustments can be performed.

The switching power supply and the method for controlling the switching power supply according to the present disclosure are introduced in detail above. In the specification, the embodiments are described in a progressive manner. Each of the embodiments mainly focuses on differences from other embodiments, and references may be made to each other for the same or similar parts among the embodiments. Since the apparatus disclosed in the embodiments corresponds to the method disclosed in the embodiments, the apparatus is described briefly, and reference may be made to the method in the embodiments for relevant parts. It should be noted that several improvements and modifications may be made by those skilled in the art to the present disclosure without departing from the principle of the present disclosure, and these improvements and modifications also fall within the protection scope of the claims of the present disclosure.

It should be noted that in the specification, relationship terms such as "first" and "second" are only used to distinguish one entity or operation from another entity or operation, rather than to necessitate or imply an actual relationship or order between the entities or operations. Moreover, terms "include", "comprise" or any other variants are intended to be non-exclusive. Therefore, a process, method, article, or device including multiple elements includes not only the elements but also other elements that are not enumerated, or also includes the elements inherent for the process, method, article or device. Unless expressively limited, the statement "including a..." does not exclude the case that other identical elements may exist in the process, method, article or device including the elements.

**Claims**

1. A switching power supply, configured to supply power to a load device, wherein the switching power supply comprises:

   a secondary-side control circuit, coupled to a secondary side of a transformer in the switching power supply, wherein the secondary-side control circuit is configured to receive a signal indicating a power requirement of the load device and encode the signal to generate encoded information; and
   a primary-side control circuit, configured to: receive, via the transformer, a feedback signal indicating an output voltage of the switching power supply, decode the encoded information based on a change in the feedback signal, and control the switching power supply to meet the power requirement of the load device.

2. The switching power supply according to claim 1, wherein the change in the feedback signal is determined through:

receiving, by the primary-side control circuit, a pulse width of the feedback signal of a current control period via the transformer, wherein the pulse width is equal to on-time of the secondary-side control circuit;
acquiring the pulse width of the feedback signal of a previous control period of the current control period, wherein the pulse width of the feedback signal of the previous control period is stored in the primary-side control circuit; and
acquiring a difference between the pulse width of the feedback signal of the current control period and the pulse width of the feedback signal of the previous control period, and determining the change in the feedback signal based on a relationship between the difference and a threshold.

3. The switching power supply according to claim 2, wherein the primary-side control circuit is configured to decode the encoded information based on the change in the feedback signal through:

decoding, by the primary-side control circuit, the encoded information transmitted by the secondary-side control circuit as a first level in response to the acquired difference being greater than the threshold; and
decoding, by the primary-side control circuit, the encoded information transmitted by the secondary-side control circuit as a second level in response to the acquired difference being less than or equal to the threshold.

4. The switching power supply according to claim 1, wherein the change in the feedback signal is determined through:

receiving, by the primary-side control circuit, a pulse width of the feedback signal of a current control period via the transformer, wherein the pulse width is equal to on-time of the secondary-side control circuit;
acquiring the pulse width of the feedback signal of a previous control period of the current control period, a primary-side current of the current control period, and the primary-side current of the previous control period, wherein the pulse width of the feedback signal of the previous control period is stored in the primary-side control circuit; and
determining the change in the feedback signal based on a relationship between a ratio of the pulse width of the feedback signal of the current control period to the primary-side current of the current control period and the ratio of the pulse width of the feedback signal of the previous control period to the primary-side current of the previous control period.

5. The switching power supply according to claim 4, wherein the primary-side control circuit is configured to decode the encoded information based on the change in the feedback signal through:

decoding, by the primary-side control circuit, the encoded information transmitted by the secondary-side control circuit as a first level in response to the ratio corresponding to the current control period being less than the ratio corresponding to the previous control period; and
decoding, by the primary-side control circuit, the encoded information transmitted by the secondary-side control circuit as a second level in response to the ratio corresponding to the current control period being equal to the ratio corresponding to the previous control period.

6. The switching power supply according to any one of claims 2 to 5, wherein the secondary-side control circuit comprises a synchronous rectifier diode, and the encoded information is determined through:
in response to the secondary-side control circuit receiving the signal indicating the power requirement of the load device, turning, by the secondary-side control circuit, the synchronous rectifier diode off after a preset delay to encode the signal as the encoded information.

7. The switching power supply according to claim 1, wherein the secondary-side control circuit comprises a synchronous rectifier diode, and the encoded information is determined through:

in response to the secondary-side control circuit receiving the signal indicating the power requirement of the load device, turning, by the secondary-side control circuit, the synchronous rectifier diode off; and
encoding, by the secondary-side control circuit after turning off the synchronous rectifier diode, the signal during a period in which the synchronous rectifier diode is on as the encoded information.

8. The switching power supply according to claim 7, wherein the secondary-side control circuit comprises a secondary-side detection circuit, and the period in which the synchronous rectifier diode is on is determined through:
detecting, by the secondary-side detection circuit, a time interval as the period, wherein the time interval starts from a time instant at which an output voltage signal of the secondary control circuit rises to a high-level state from a low-level state, and ends at a time instant at which the output voltage signal starts to fall from the high-level state to the low-level state after the synchronous rectifier diode is on.

9. The switching power supply according to claim 8, wherein the primary-side control circuit comprises a primary-side detection circuit, and the change in the feedback signal is determined through:
acquiring, by the primary-side detection circuit, a relationship between a current feedback signal and a reference value within a period, which starts from a time instant at which the feedback signal falls below the reference value, to determine the change in the current feedback signal.

10. The switching power supply according to claim 9, wherein the primary-side control circuit is configured to decode the encoded information based on the change in the feedback signal through:

decoding, by the primary-side control circuit, the encoded information transmitted by the secondary-side control circuit as a first level in response to the current feedback signal being detected to exceed the reference value within the period; and
decoding, by the primary-side control circuit, the encoded information transmitted by the secondary-side control circuit as a second level in response to the current feedback signal being detected as not exceeding the reference value within the period.

11. The switching power supply according to claim 10, wherein the secondary-side control circuit and the primary-side control circuit each comprises a respective multiplexed PIN and is configured to adjust a resistance of a resistor connected to the multiplexed PIN to determine the period, and the resistance of the resistor connected to the multiplexed PIN is mapped to the period.

12. The switching power supply according to claim 11, wherein the secondary-side control circuit further comprises a voltage detection circuit,
the voltage detection circuit is configured to detect a current at a VCC PIN of the secondary-side control circuit to obtain a change in a voltage at the VCC PIN, and the change in the voltage represents the change in the resistance of the resistor.

13. A method for controlling a switching power supply, wherein the switching power supply is configured to supply power to a load device and comprises a secondary-side control circuit and a primary-side control circuit, the secondary-side control circuit is coupled to a secondary side of a transformer in the switching power supply, and the method comprises:

controlling the secondary-side control circuit to receive a signal indicating a power requirement of the load device and encode the signal to generate encoded information; and
controlling the primary-side control circuit to: receive, via the transformer, a feedback signal indicating an output voltage of the switching power supply, decode the encoded information based on a change in the feedback signal, and control the switching power supply to meet the power requirement of the load device.

14. The method for controlling a switching power supply according to claim 13, wherein the change in the feedback signal is determined through:

receiving a pulse width of the feedback signal of a current control period via the transformer, wherein the pulse width is equal to on-time of the secondary-side control circuit;
acquiring the pulse width of the feedback signal of a previous control period of the current control period, wherein the pulse width of the feedback signal of the previous control period is stored in the primary-side control circuit; and
acquiring a difference between the pulse width of the feedback signal of the current control period and the pulse width of the feedback signal of the previous control period, and determining the change in the feedback signal based on a relationship between the difference and a threshold.

15. The method for controlling a switching power supply according to claim 14, wherein the decoding the encoded information based on the change in the feedback signal comprises:

decoding, in response to the acquired difference being greater than the threshold, the encoded information transmitted by the secondary-side control circuit as a first level; and
decoding, in response to the acquired difference being less than or equal to the threshold, the encoded information transmitted by the secondary-side control circuit as a second level.

16. The method for controlling a switching power supply according to claim 13, wherein the change in the feedback signal is determined through:

receiving a pulse width of the feedback signal of a current control period via the transformer, wherein the pulse width is equal to on-time of the secondary-side control circuit;

acquiring the pulse width of the feedback signal of a previous control period of the current control period, a primary-side current of the current control period, and the primary-side current of the previous control period, wherein the pulse width of the feedback signal of the previous control period is stored in the primary-side control circuit; and

determining the change in the feedback signal based on a relationship between a ratio of the pulse width of the feedback signal of the current control period to the primary-side current of the current control period and the ratio of the pulse width of the feedback signal of the previous control period to the primary-side current of the previous control period.

17. The method for controlling a switching power supply according to claim 16, wherein the decoding the encoded information based on the change in the feedback signal comprises:

decoding, in response to the ratio corresponding to the current control period being less than the ratio corresponding to the previous control period, the encoded information transmitted by the secondary-side control circuit as a first level; and

decoding, in response to the ratio corresponding to the current control period being equal to the ratio corresponding to the previous control period, the encoded information transmitted by the secondary-side control circuit as a second level.

18. The method for controlling a switching power supply according to any one of claims 14 to 17, wherein the secondary-side control circuit comprises a synchronous rectifier diode, and the encoded information is determined through:

turning, in response to receiving the signal indicating the power requirement of the load device, the synchronous rectifier diode off after a preset delay, to encode the signal as the encoded information.

19. The method for controlling a switching power supply according to claim 13, wherein the secondary-side control circuit comprises a synchronous rectifier diode, and the encoded information is determined through:

turning, in response to receiving the signal indicating the power requirement of the load device, the synchronous rectifier diode off; and

encoding, after turning off the synchronous rectifier diode, the signal during a period in which the synchronous rectifier diode is on as the encoded information.

20. The method for controlling a switching power supply according to claim 19, wherein the secondary-side control circuit comprises a secondary-side detection circuit, and the period in which the synchronous rectifier diode is on is determined through:

detecting a time interval as the period, wherein the time interval starts from a time instant at which an output voltage signal of the secondary control circuit rises to a high-level state from a low-level state, and ends at a time instant at which the output voltage signal starts to fall from the high-level state to the low-level state after the synchronous rectifier diode is on.

21. The method for controlling a switching power supply according to claim 20, wherein the primary-side control circuit comprises a primary-side detection circuit, and the change in the feedback signal is determined through:

acquiring a relationship between a current feedback signal and a reference value within a period, which starts from a time instant at which the feedback signal falls below the reference value, to determine the change in the current feedback signal.

22. The method for controlling a switching power supply according to claim 21, wherein the decoding the encoded information based on the change in the feedback signal comprises:

decoding, in response to the current feedback signal being detected to exceed the reference value within the period, the encoded information transmitted by the secondary-side control circuit as a first level; and

decoding, in response to the current feedback signal being detected as not exceeding the reference value within the period, the encoded information transmitted by the secondary-side control circuit as a second level.

23. The method for controlling a switching power supply according to claim 22, wherein the secondary-side control circuit and the primary-side control circuit each comprises a respective multiplexed PIN and is configured to adjust a resistance of a resistor connected to the multiplexed PIN to determine the period, and the resistance of the resistor connected to the multiplexed PIN is mapped to the period.

24. The method for controlling a switching power supply according to claim 23, wherein the secondary-side control circuit further comprises a voltage detection circuit,

the voltage detection circuit is configured to detect a current at a VCC PIN of the secondary-side control circuit to obtain a change in a voltage at the VCC PIN, and the change in the voltage represents the change in the resistance of the resistor.

25. The method for controlling a switching power supply according to claim 13, wherein after the feedback signal is received via the transformer, the method further comprises:

setting a start bit and a tail check bit in the encoded information; and

decoding the encoded information based on the change in the feedback signal, the start bit, and the tail check bit to obtain decoded information.

**FIG. 1**

**FIG. 2**

EP 4 749 899 A1

**FIG. 3**

**FIG. 4**

**FIG. 5**

Control a secondary-side control circuit to receive a signal indicating a power requirement of a load device and encode the signal to generate encoded information — S11

Control a primary-side control circuit to: receive, via a transformer, a feedback signal indicating an output voltage of a switching power supply, decode the encoded information based on a change in the feedback signal, and control the switching power supply to meet the power requirement of the load device — S12

**FIG. 6**

## INTERNATIONAL SEARCH REPORT

| International application No. |
| --- |
| **PCT/CN2023/119614** |

**A. CLASSIFICATION OF SUBJECT MATTER**

H02M 1/08(2006.01)i

According to International Patent Classification (IPC) or to both national classification and IPC

**B. FIELDS SEARCHED**

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

CNTXT, ENTXT, CNKI: 原边, 副边, 负载, 变压器, 电压, 电流, 反馈, 周期, 光耦, 编码, 解码, supercharger, terminal, decoding, circuit, voltage, current, order, feedback, control, decod+, encod+, switching, isolation, optocoupler

**C. DOCUMENTS CONSIDERED TO BE RELEVANT**

| Category* | Citation of document, with indication, where appropriate, of the relevant passages | Relevant to claim No. |
| --- | --- | --- |
| X | CN 114938043 A (ON-BRIGHT ELECTRONICS (SHANGHAI) CO., LTD.) 23 August 2022 (2022-08-23) description, paragraphs [0024]-[0109], and figures 1-12 | 1-25 |
| A | CN 106385091 A (MIX-DESIGN SEMICONDUCTOR TECHNOLOGY LIMITED) 08 February 2017 (2017-02-08) entire document | 1-25 |
| A | CN 108448877 A (BCD SEMICONDUCTOR MANUFACTURING LIMITED et al.) 24 August 2018 (2018-08-24) entire document | 1-25 |
| A | CN 116054593 A (MIX-DESIGN SEMICONDUCTOR TECHNOLOGY LIMITED) 02 May 2023 (2023-05-02) entire document | 1-25 |
| A | CN 112865543 A (BCD (SHANGHAI) MICRO-ELECTRONICS LIMITED) 28 May 2021 (2021-05-28) entire document | 1-25 |

☑ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **03 November 2023** | **21 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 749 899 A1**

## INTERNATIONAL SEARCH REPORT

| International application No. |
| --- |
| **PCT/CN2023/119614** |

### C. DOCUMENTS CONSIDERED TO BE RELEVANT

| Category* | Citation of document, with indication, where appropriate, of the relevant passages | Relevant to claim No. |
| --- | --- | --- |
| A | US 2017187200 A1 (DIALOG SEMICONDUCTOR (UK) LIMITED) 29 June 2017 (2017-06-29) entire document | 1-25 |

## INTERNATIONAL SEARCH REPORT
### Information on patent family members

International application No.

**PCT/CN2023/119614**

| Patent document cited in search report | | | Publication date (day/month/year) | Patent family member(s) | | | Publication date (day/month/year) |
|---|---|---|---|---|---|---|---|
| CN | 114938043 | A | 23 August 2022 | None | | | |
| CN | 106385091 | A | 08 February 2017 | CN | CN106385091 | B | 23 October 2018 |
| CN | 108448877 | A | 24 August 2018 | None | | | |
| CN | 116054593 | A | 02 May 2023 | CN | CN116054593 | B | 13 June 2023 |
| CN | 112865543 | A | 28 May 2021 | None | | | |
| US | 2017187200 | A1 | 29 June 2017 | DE | 102016202388 | A1 | 29 June 2017 |
| | | | | DE | 102016202388 | B4 | 01 March 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310904247